# EUROPEAN PATENT SPECIFICATION

(11) **EP 1 187 504 B1**
(45) Date of publication and mention of the grant of the patent: **22.08.2007**
(21) Application number: 01000440.6
(22) Date of filing: 10.09.2001
(51) Int. Cl.: H04Q 7/36, H04L 12/56, H04L 12/28

(54) **Wireless communication channel selection using passive interference avoidance techniques**
Drahtlose Kommunikationskanalselektion mittels passiven Interferenzvermeidungsverfahren
Sélection de canaux pour communication sans fil en utilisant des techniques passives pour éviter l'interférence

(30) Priority: 11.09.2000 US 231652 P; 25.07.2001 US 915091
(43) Date of publication of application: 13.03.2002
(73) Proprietor: TEXAS INSTRUMENTS INC., Dallas, Texas 75251 (US)
(72) Inventor: Schmidl, Timothy M., Dallas, TX 75243 (US); Dabak, Anand G., Plano, TX 75025 (US); Nafie, Mohammed, Richardson, TX 75081 (US); Gatherer, Alan, Richardson, TX 75081 (US)
(74) Representative: Holt, Michael

(56) References cited:
- EP-A- 0 716 514
- WO-A-01/31942
- DE-A- 19 651 709
- US-A- 6 047 175
- "Broadband Radio Access Networks (BRAN);HIPERLAN Type 2; System Overview" ETSI TR 101 683 V1.1.1, XX, XX, 8 February 2000 (2000-02-08), pages 1-20, XP002176358

## Description

### FIELD OF THE INVENTION

The invention relates generally to wireless communications and, more particularly, to channel selection in wireless communications.

### BACKGROUND OF THE INVENTION

Interference caused by overlapping frequency use is a common problem in wireless communications. For example, several different types of wireless communication systems operate within the 2.4 GHz ISM band. Examples of such systems include IEEE Std 802.11b systems, Bluetooth 1.0 systems and Bluetooth 2.0 systems. Thus, unless properly managed, wireless communications within one system can easily interfere with wireless communications within another system, thereby disadvantageously affecting the quality of communication in both systems.

Existing interference avoidance techniques are directed to situations wherein multiple users within a single wireless communication system share a common frequency channel. For example, IEEE Std 802.11b includes a clear channel assessment technique wherein a user who wishes to transmit on the common frequency channel first listens on that channel to determine whether another user is currently transmitting on the channel. If so, the listening user continues to listen to the channel until it determines that the other user has stopped transmitting, thereby making the channel available for the listening user. When this occurs, the listening user knows that it can begin transmission without causing interference to or receiving interference from another user. Although the clear channel assessment technique can be effective where multiple users are deliberately assigned to and knowingly share a common frequency channel, the technique would be much less effective if applied in situations wherein communications occurring within different multi-user wireless communication systems interfere with one another.

It is therefore desirable to provide for avoidance of interference between separate wireless communication systems that can operate in overlapping frequency ranges.

Previous interference monitoring techniques as disclosed by Van De Berg (EP 0 716 514 A1) either accept or reject an entire frequency band based on interference measurements of a single frequency within that band. Other frequency selection methods fail to adapt to communication quality requirements for particular communication applications.

According to the present invention there is provided a method as set forth in the claims.

### BRIEF DESCRIPTION OF THE DRAWINGS

The present invention will now be further described by way of example, with reference to the preferred and exemplary embodiments illustrated in the figures of the accompanying drawings in which:
FIGURE 1 illustrates exemplary frequency band selection operations.
FIGURE 2 diagrammatically illustrates pertinent portions of exemplary embodiments of a wireless communication station which can perform the operations of FIGURE 1.
FIGURE 3 diagrammatically illustrates exemplary embodiments of the band selection controller of FIGURE 2.
FIGURE 4 diagrammatically illustrates pertinent portions of exemplary embodiments of a wireless communication station which can perform the operations illustrated in FIGURE 1 and which reuses components from the wireless communications interface of
FIGURE 2.

### DETAILED DESCRIPTION

According to the invention, a selected wide band channel is passively monitored to obtain information about channel quality and/or interfering signals in that band. This can be done, for example, when a wireless communication station decides that a new channel should be selected for future communications. Such a decision can be made, for example, in response to observed poor channel quality associated with the channel that is currently being used, or in response to user selection of a communication application that requires relatively high quality transmission or a relatively high transmission rate, for example audio, video and multimedia applications. In some embodiments, wide band channels corresponding to possible interferers (for example known 802.11b 16-17 MHz channels) are passively monitored to determine whether or not the quality/interference levels in those bands are acceptable. In some embodiments, the transmission bandwidth (for example a 4-5 MHz Bluetooth 2.0 channel) in which transmission is desired can be passively monitored to determine channel quality/interference levels. In other embodiments, any desired combination of wide band channels of known interferers and desired transmission bandwidths can be passively monitored. In some embodiments, the passive monitoring is accomplished by making conventional RSSI (received signal strength indication) measurements at one or both ends of an existing wireless communication link. Different channel bandwidths can be used for the RSSI measurements, e.g. the 16-17 MHz of 802.11b and a 10 MHz channel width to avoid microwave oven interference.

When passive monitoring is performed at both ends of a communication link, the results obtained by one end can be reported to the other end using any desired type of conventional wireless communication technique. For example, if the wireless communication link exists between two Bluetooth 1.0 devices, then the slave device can report its observations to the master device using a predetermined Bluetooth hopping sequence. Conversely, the master could report its observations to the slave in the same fashion. In some embodiments, each frequency in a wide band channel is assigned an index, and the communicating devices can report their observations to one another by reporting the indices associated with either the unacceptably interfered frequencies or the acceptably clear frequencies. For example, if a 16 MHz wide band channel associated with a possible interferer is found to be acceptably clear, and if transmission in a 4 MHz band is desired, then indices of 12 possible 4 MHz bands are reported. In some embodiments, these indices are repeatedly transmitted to the other end of the link for a predetermined number of transmissions. Any predetermined numbering scheme can be used to designate the various bands, and the numbers corresponding to either clear or interfered bands can be transmitted from one end to the other.

The following example illustrates an advantage of passively monitoring interference levels at both ends of a communication link. If a pair of communicating Bluetooth devices at opposite ends of a Bluetooth communication link passively monitor the wide band channels associated with an IEEE 802.11b system, it is possible to detect whether either of the Bluetooth devices is interfered with by an 802.11b device. This is advantageous because, due to geographical circumstances, it is possible for one end of a Bluetooth link to be interfered with by an 802.11b device while the other end of the Bluetooth link is substantially free of 802.11b interference.

In some embodiments, the passive monitoring can be applied to narrow band channels, such as the 1 MHz channels of Bluetooth 1.0 systems, and then several of these narrow band channel observations can be combined to obtain a resultant observation on a wider band channel, for example a 5 MHz channel of a Bluetooth 2.0 system.

After using passive monitoring techniques such as described above, an active probing technique can be used with respect to each available frequency of any wide band channels that the passive monitoring has identified as acceptable. An example of such an active probing technique is the probe, listen and select (PLS) technique. In other embodiments, any desired frequency channel within an acceptable wide band channel can be chosen arbitrarily, without passively or actively monitoring that specific frequency individually.

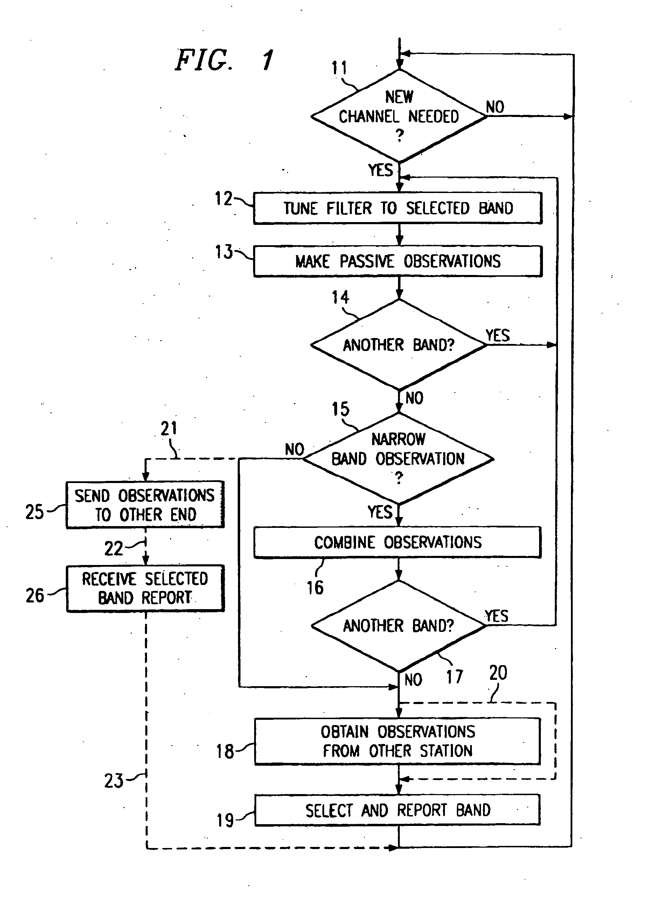

FIGURE 1 illustrates exemplary operations which can be performed according to the invention. It is determined at 11 whether a new wide band channel should be selected. This decision can be made, for example, in response to unacceptable communication quality in an existing wireless communication link between two devices, or in response to user selection of a communication application that requires, for example, a relatively high transmission quality or a relatively high transmission data rate (for example audio, video or multimedia applications). The decision at 11 can also be received from the other end of the link. When it is determined at 11 that a new channel should be selected, a filter is appropriately tuned to a frequency band that is to be passively monitored, for example a wide band channel associated with a known interfering system, a desired transmission bandwidth, or a narrow band channel that is to be observed in order to obtain channel quality/interference information about a wider band channel that includes the narrow band channel. After making the desired passive channel quality/interference observations (for example RSSI measurements) at 13, it is determined at 15 whether another band is to be observed. For example, the bands of all or only some possible interferers may be checked. If another band is to be observed, the filter is tuned to that band at 12, and corresponding passive channel quality/interference observations are made at 13. When it is determined at 14 that the passive

observations have been made on all desired frequency bands, it is then determined at 15 whether the observed frequency bands are narrow bands from which a determination about a wider band is to be made. If not, then passive observations made at the other end of the link are obtained (as received from the other end) at 18, and a wide band channel (or channels) is selected (and reported to the other end of the link) at 19 based on the available passive observation information. Thereafter, operations return to 11.

The broken line 20 in FIGURE 1 illustrates embodiments wherein no observations are made at the other end of the link, and thus no observations are received at 18. In such embodiments, the wide band channel is selected at 19 based on the observations made at this end of the link.

The broken lines 21-23 in FIGURE 1 illustrate embodiments in which the device after the other end of the link makes the wide band selection. In such embodiments, the device at this end of the link simply transmits its observations to the other end at 25, and thereafter receives the selected wide band information at 26.

Returning to decision 15 in FIGURE 1, if it is determined that narrow band components were previously observed at 12-14, then the information observed with respect to all narrow band components is combined at 16 to produce a resultant wide band observation. For example, the energy from each of a plurality of narrow band RSSI measurements can be summed together at 16 to produce a resultant RSSI measurement for the corresponding wide band channel in which the observed narrow bands exist. Thereafter, as indicated at 17, the operations illustrated at 12-16 are repeated until observations for all desired wide band channels have been obtained. Thereafter, operations proceed to 18, 19 or 25 as described above.

In some embodiments, the question at 11 can be answered "yes" periodically, even if no new channel is needed. In this way, known good channels will be immediately available when, for example, it is later determined at 11 that a new channel is actually needed.

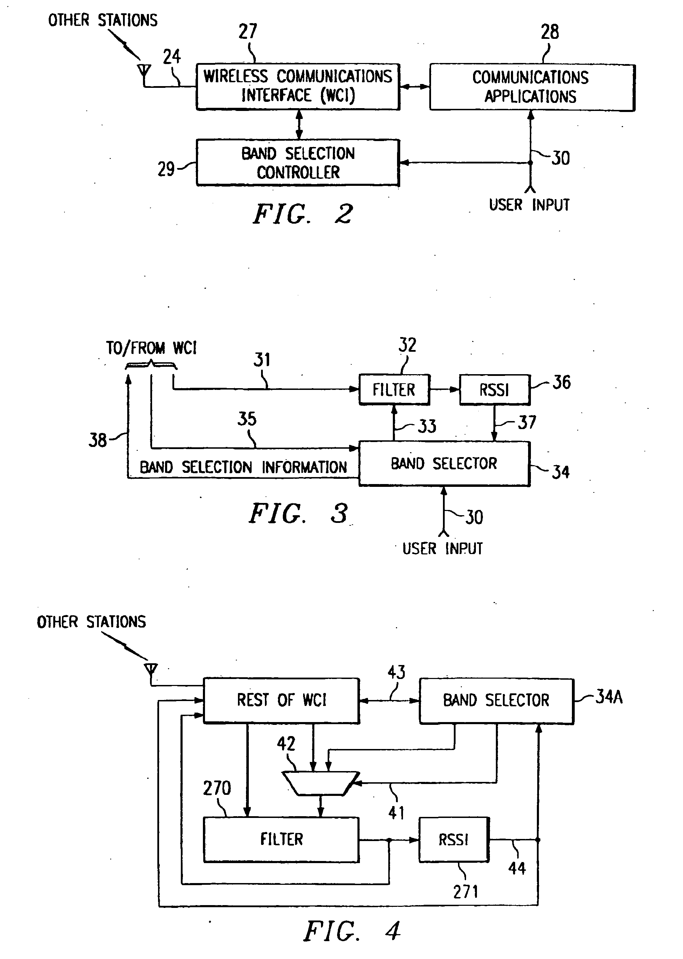

FIGURE 2 diagrammatically illustrates pertinent portions of exemplary embodiments of a wireless communication station according to the invention which can perform the exemplary operations illustrated in FIGURE 1. The communication station of FIGURE 2, for example a Bluetooth communication station or an IEEE 802.11b communication station, includes an antenna assembly 24 for communicating with other communication stations via wireless communication frequency channels. A wireless communications interface 27 is coupled between the antenna 24 and one or more user communication applications 28. The wireless communications interface 27 can use well known conventional techniques for interfacing between the antenna 24 and the communication applications 28. A band selection controller 29 is coupled for bidirectional communication with the wireless communications interface 27.

A user input signal 30 that is used to select a communication application at 28 is also applied to the band selection controller 29, thereby permitting the band selection controller to determine whether another frequency band should be selected in view of the communication application selected by the user. The band selection controller 29 may also determine that another frequency band should be selected based on information conventionally produced by the wireless communications interface 27 indicative of the communication quality of a currently active frequency channel. The band selection controller 29 receives from the wireless communications interface 27 frequency channel signals received via the antenna 24. The band selection controller 29 performs the above-described passive monitoring technique to obtain channel quality/interference observations with respect to any selected wide band channel.

FIGURE 3 diagrammatically illustrates exemplary embodiments of the band selection controller of FIGURE 2. The input frequency channel signal 31 received from the wireless communications interface 27 is applied to a tunable filter 32 whose filter parameters are provided at 33 by a band selector 34. The band selector 34 responds to the user input 30 and/or the current channel quality information received at 35 from the wireless communications interface 27 to select a wide (or narrow) band channel for observation and tune the filter 32 appropriately to observe the selected channel. The filter 32 produces a suitably filtered output signal which is applied to an RSSI measurement portion (passive interference monitor) 36. The RSSI measurement portion 36 produces an RSSI measurement for any wide (or narrow) band channel selected by the band selector 34. The RSSI measurement information is provided at 37 to the band selector 34. In the case of narrow band RSSI measurements, the band selector 34 is operable to sum the energy in the narrow band measurements to produce a resultant wide band measurement.

After the RSSI measurements have been collected for all wide band channels selected by the band selector 34, these measurements (together with any measurements received at 35 from the other end of the link) are evaluated by the band selector 34 to determine which of the observed wide band channels is (are) preferred, for example which of the wide band channels is (are) least interfered. At 38, the band selector 34 provides to the wireless communications interface 27 information indicative of the preferred wide band channel, which information can then be forwarded across the existing frequency channel to the other end of the current wireless communication link.

In some embodiments, the band selector 34 receives at 35 from the wireless communications interface 27 a message from the other end of the link instructing the band selector 34 to make passive observations on certain wide band channels indicated in the message. In such embodiments, the band selector controls the filter 32 appropriately to obtain the desired RSSI measurements, and simply forwards these measurements at 38 to the wireless communications interface 27, which in turn forwards these measurements to the other end of the link. The station at the other end of the link uses the forwarded measurements to make its determination of the preferred wide band channel (or channels), and then transmits information indicative of the preferred wide band channel(s) to the wireless communications interface 27. At that point, the wireless communications interface 27 can switch to the preferred wide band channel.

In some embodiments, the band selection controller 29 of FIGURE 2 can re-use a filter and an RSSI measurement portion of the conventional wireless communications interface 27 of FIGURE 2. Such an exemplary embodiment is illustrated generally in FIGURE 4. In the embodiment of FIGURE 4, a filter 270 and an RSSI measurement portion 271 of the wireless communications interface 27 can be utilized by both the wireless communications interface 27 and a band selector 34A. The band selector 34A operates in generally the same fashion as the band selector 34 of FIGURE 3, but includes a control output 41 for controlling a selector 42 that selects either the wireless communications interface 27 or the band selector 34A for tuning the filter 270. In this fashion, the wireless communications interface 27 can use the filter 270 as it normally would to receive communications on various frequency channels, and the band selector 34A can also tune the filter 270 to any desired frequency band for purposes of passive interference monitoring. The output of filter 270 drives the RSSI measurement portion 271, which produces an RSSI measurement output 44 that is used by both the band selector 34A and the wireless communications interface 27.

The band selector 34A is also coupled at 43 to receive from the wireless communications interface 27 (in various embodiments) current channel quality information, passive interference measurements made at and transmitted from the other end of the link, or wide band channel measurement instructions from at the other end of the link. Likewise at 43, the band selector 34A can provide to the wireless communications interface 27 information indicative of a preferred wide band channel (or channels), which the wireless communications interface 27 can then appropriately forward to the other end of the wireless communication link.

It will be evident to workers in the art that the exemplary embodiments of FIGURES 1-4 can be readily implemented by suitable modifications in software, hardware, or a combination of software and hardware, in conventional wireless communication stations such as, for example, Bluetooth 2.0 stations and IEEE 802.11b stations.

Although exemplary embodiments of the invention are described above in detail, this does not limit the scope of the invention, which can be practiced in a variety of embodiments.

## Claims

1. A method of selecting a plurality of frequency bands for use in a desired wireless communication from among a plurality of frequency bands available to be used for the desired wireless communication, comprising : desired wireless communication, comprising:
passively monitoring (13) the plurality of frequency bands to determine interference information for each of the frequency bands; **characterized by** :
combining the interference information (16) of said each of the frequency bands to produce a signal quality indication; and
selecting the plurality of frequency bands (19) for the desired wireless communication in response to the signal quality indication.

2. The method of Claim 1, wherein said passive monitoring step includes monitoring communication quality associated with the plurality of frequency bands.

3. The method of Claim 1 or Claim 2, wherein said passive monitoring step includes monitoring interference associated with the plurality of frequency bands.

4. The method of any preceding claim, wherein a frequency band is an IEEE 802.11b band.

5. The method of any preceding Claim, wherein at least one frequency band of the plurality of frequency bands is a Bluetooth 2.0 band.

6. The method of any preceding Claim, wherein said passive monitoring step includes each of two wireless communication stations passively monitoring at least some of said plurality of frequency bands.

7. The method of any preceding Claim, wherein the plurality of frequency bands includes a frequency band associated with microwave oven interference.

8. The method of any preceding Claim, wherein said selecting step includes the wireless communication station selecting the plurality of frequency bands for the desired wireless communication and informing another wireless communication station of the selected frequency bands.

## Patentansprüche

1. Verfahren zum Auswählen mehrerer Frequenzbänder, die in einer gewünschten Drahtloskommunikation verwendet werden sollen, aus mehreren Frequenzbändern, die verfügbar sind, um für die gewünschte Drahtloskommunikation verwendet zu werden, das umfasst:
passives Überwachen (13) der mehreren Frequenzbänder, um Störinformationen für jedes der Frequenzbänder zu bestimmen; **gekennzeichnet durch**:
Kombinieren der Störinformationen (16) jedes der Frequenzbänder, um eine Angabe der Signalgüte zu erzeugen; und
Auswählen der mehreren Frequenzbänder (19) für die gewünschte Drahtloskommunikation in Reaktion auf die Angabe der Signalgüte.

2. Verfahren nach Anspruch 1, bei dem der Schritt des passiven Überwachens das Überwachen der Kommunikationsgüte, die den mehreren Frequenzbändern eigentümlich ist, umfasst.

3. Verfahren nach Anspruch 1 oder Anspruch 2, bei dem der Schritt des passiven Überwachens das Überwachen der Störung, die den mehreren Frequenzbändern eigentümlich ist, umfasst.

4. Verfahren nach einem vorhergehenden Anspruch, bei dem ein Frequenzband ein IEEE 802.11b-Band ist.

5. Verfahren nach einem vorhergehenden Anspruch, bei dem wenigstens ein Frequenzband der mehreren Frequenzbänder ein Bluetooth-2.0-Band ist.

6. Verfahren nach einem vorhergehenden Anspruch, bei dem der Schritt des passiven Überwachens den Schritt umfasst, bei dem jede von zwei Drahtloskommunikationsstationen wenigstens einige der mehreren Frequenzbänder passiv überwacht.

7. Verfahren nach einem vorhergehenden Anspruch, bei dem die mehreren Frequenzbänder ein Frequenzband, das einer Mikrowellenofen-Störung zugeordnet ist, umfasst.

8. Verfahren nach einem vorhergehenden Anspruch, bei dem der Auswahlschritt den Schritt umfasst, bei dem die Drahtloskommunikationsstation die mehreren Frequenzbänder für die gewünschte Drahtloskommunikation auswählt und eine weitere Drahtloskommunikationsstation über die ausgewählten Frequenzbänder informiert.

## Revendications

1. Procédé de sélection d'une pluralité de bandes de fréquences destinées à servir dans une communication sans fil souhaitée parmi une pluralité de bandes de fréquences disponibles pour être utilisées dans la communication sans fil souhaitée, comprenant l'étape consistant à :
surveiller de manière passive (13) la pluralité de bandes de fréquences afin de déterminer des informations d'interférence pour chacune des bandes de fréquences ; **caractérisé par** les étapes consistant à :
combiner les informations d'interférence (16) de chacune desdites bandes de fréquences de façon à produire une indication de qualité de signal ; et
sélectionner la pluralité de bandes de fréquences (19) pour la communication sans fil souhaitée en réponse à l'indication de qualité de signal.

2. Procédé selon la revendication 1, dans lequel ladite étape de surveillance passive comprend la surveillance de la qualité de communication associée à la pluralité de bandes de fréquences.

3. Procédé selon la revendication 1 ou la revendication 2, dans lequel ladite étape de surveillance passive comprend la surveillance de l'interférence associée à la pluralité de bandes de fréquences.

4. Procédé selon l'une quelconque des revendications précédentes, dans lequel une bande de fréquences est une bande IEEE 802.11b.

5. Procédé selon l'une quelconque des revendications précédentes, dans lequel au moins une bande de fréquences de la pluralité de bandes de fréquences est une bande Bluetooth 2.0.

6. Procédé selon l'une quelconque des revendications précédentes, dans lequel ladite étape de surveillance passive prévoit que chacune des deux stations de communication sans fil soumet à une surveillance passive au moins certaines de ladite pluralité de bandes de fréquences.

7. Procédé selon l'une quelconque des revendications précédentes, dans lequel la pluralité de bandes de fréquences comprend une bande de fréquences associée à des interférences avec des fours à micro-ondes.

8. Procédé selon l'une quelconque des revendications précédentes, dans lequel ladite étape de sélection prévoit que la station de communication sans fil sélectionne la pluralité de bandes de fréquences pour la communication sans fil souhaitée et informe une autre station de communication sans fil à propos des bandes de fréquences sélectionnées.
